# EUROPÄISCHE PATENTSCHRIFT

(11) **EP 2 143 577 B1**
(45) Veröffentlichungstag und Bekanntmachung des Hinweises auf die Patenterteilung: **10.09.2014**
(21) Anmeldenummer: 09164881.6
(22) Anmeldetag: 08.07.2009
(51) Int. Cl.: B60H 3/00, A61L 9/12

(54) **Duftmittelspender**
Fragance dispenser
Distributeur de parfum

(30) Priorität: 11.07.2008 DE 102008032615
(43) Veröffentlichungstag der Anmeldung: 13.01.2010
(73) Patentinhaber: Behr GmbH & Co. KG, 70469 Stuttgart (DE)
(72) Erfinder: Fieger, Martin, 71636 Ludwigsburg (DE); Fritsche, Uwe, 71686 Remseck (DE); Kroner, Peter, 66482 Zweibrücken (DE); Lochmahr, Karl, 71665 Vaihingen/Enz (DE); Rais, Thomas, 71672 Marbach/Neckar (DE); Zeller, Kuno, 70435 Stuttgart (DE); Augustin, Kai, 70771 Leinfelden (DE); Stiehler, Daniela, 70597 Stuttgart (DE)
(74) Vertreter: Grauel, Andreas

(56) Entgegenhaltungen:
- EP-A- 2 085 258
- WO-A-2009/003704
- WO-A-2009/016590
- DE-A1- 10 327 122
- DE-A1- 10 344 305
- US-A- 5 894 001

## Beschreibung

Die Erfindung betrifft eine Duftmittelvorratsvorrichtung, welche wenigstens eine Duftmittelbehältereinrichtung und wenigstens eine Duftmittelaustragseinrichtung aufweist. Weiterhin betrifft die Erfindung eine Beduftungsvorrichtung, insbesondere eine Beduftungsvorrichtung für ein Fahrzeug, vorzugsweise eine Beduftungsvorrichtung für ein Kraftfahrzeug.

Bei der Aufarbeitung von Luft erfolgt in zunehmendem Maße auch ein Einbringen von Duftstoffen in die aufzuarbeitende bzw. in die aufgearbeitete Luft. Duftstoffe werden nämlich über das Limbische System unter Umgehung des Bewusstseins wahrgenommen. Aufgrund dieser Umgehung von Denkprozessen kann mittels Duftstoffen besonders effektiv auf den Gemütszustand einer Person eingewirkt werden. Dies wird beispielsweise bei der Klimatisierung von Büros, Verkaufsstätten und Fahrzeugen, insbesondere von Luftfahrzeugen, ausgenutzt, um beispielsweise die Kauflust zu fördern, oder nervöse Passagiere zu beruhigen. Auch im Kraftfahrzeugbereich wird eine Beduftung in zunehmendem Maße eingesetzt.

Bislang werden im Kraftfahrzeugbereich zur Beduftung des Fahrzeuginnenraums oftmals Duftbäume aus Karton oder einem entsprechenden Material verwendet. Diese Duftbäume sind mit einem Duftstoff getränkt, der sukzessive an die Außenluft abgegeben wird. Die Duftbäume werden in der Regel am Fahrzeuginnenspiegel befestigt, wo sie gut erkennbar sind. Die Duftbäume werden jedoch oftmals als kitschig und störend empfunden. Darüber hinaus geben die Duftbäume den Duftstoff kontinuierlich an die Außenluft ab, so dass sich die Fahrzeuginsassen nach einiger Zeit an den Geruch gewöhnen und ihn schlussendlich nicht mehr wahrnehmen. Manche Personen bevorzugen jedoch eine dauerhaft wahrnehmbare Beduftung des Fahrzeuginnenraums.

Um eine Gewöhnung an den Duftstoff zu verhindern, wurden bereits Beduftungsvorrichtungen vorgeschlagen, bei denen der Duftstoff stoßweise in Intervallen freigesetzt wird. Diese Duftstöße können grundsätzlich über einen beliebig langen Zeitraum bewusst wahrgenommen werden.

Komplexe Beduftungsvorrichtungen werden aus Kostengründen in der Regel nachfüllbar ausgeführt. Das heißt, dass ein großer Anteil der Baugruppen der Beduftungsvorrichtung dauerhaft verwendet wird. Die sich verbrauchenden Duftstoffe werden entweder mit einer Nachfülleinheit (meist eine Nachfüllspritze) nachgefüllt, oder der leere Duftmittelbehälter wird durch einen neuen Duftmittelbehälter ersetzt. Es hat sich jedoch herausgestellt, dass ein derartiges Nachfüllen einer Beduftungsvorrichtung aus hygienischen Gründen problematisch ist. Denn bei einem Nachfüllen des Duftmittels bzw. bei einem Austausch des Duftmittelbehälters können Verunreinigungen, Sporen oder Keime in das Duftmittel gelangen und sich dort ggfs. vermehren. Diese verteilen sich anschließend mit dem Duftmittel im Kraftfahrzeuginnenraum, wo sie in die Atemwege oder auf die Haut der Fahrzeuginsassen gelangen. Da die Fahrzeugpassagiere den Duftstoffen funktionsbedingt über einen langen Zeitraum ausgesetzt sind, ist dies aus medizinischer Sicht nicht unbedenklich. Dies gilt insbesondere für Beduftungsvorrichtungen, bei denen das Duftmittel versprüht wird.

Möglich ist es, den Duftstoffen eine entsprechende Menge an Konservierungsstoffen beizumischen. Jedoch können sich auch derartige Konservierungsstoffe als gesundheitlich bedenklich erweisen. Darüber hinaus lehnen viele Verbraucher Konservierungsstoffe aus grundsätzlichen Erwägungen ab. Möglich ist es auch, die Duftstoffe vor dem Verteilen (bzw. beim Verteilen) durch Erhitzen zu sterilisieren. Hier erweist sich jedoch als nachteilig, dass die Duftauthentizität der Duftstoffe beim Erhitzen oftmals leidet. DE 103 27 122 A1 offenbart eine Duftmittelvorratsvorrichtung nach dem Oberbegriff des Anspruchs 1.

Die Aufgabe der Erfindung liegt somit darin, eine verbesserte Duftmittelvorratsvorrichtung, bzw. eine verbesserte Beduftungsvorrichtung vorzuschlagen.

Dazu wird eine Duftmittelvorratsvorrichtung nach Anspruch 1 vorgeschlagen. Die Duftmittelvorratsvorrichtung kann als austauschbare Einheit aus Duftmittelbehältereinrichtung, Duftmittelaustragseinrichtung und Koppelungseinrichtung ausgebildet werden. Wenn also beispielsweise das Duftmittel einer Beduftungsvorrichtung erschöpft ist, so kann die gesamte Duftmittelvorratsvorrichtung ausgetauscht werden. Dadurch kann insbesondere eine Kontamination des Duftmittels beim Nachfüllen von Duftmittel verhindert werden, oder zumindest stark verringert werden. Dadurch, dass lediglich eine Koppelungseinrichtung zur Ankopplung der Duftmittelvorratsvorrichtung an wenigstens eine Aktuatorvorrichtung vorgesehen werden kann, steigt der bauliche Aufwand der Duftmittelvorratsvorrichtung üblicherweise nicht übermäßig an. Üblicherweise ist nämlich gerade die Aktuatoreinrichtung relativ komplex und aufwändig. Diese kann jedoch unabhängig von der Duftmittelvorratsvorrichtung vorgesehen werden, so dass diese nicht mitsamt der Duftmittelvorratsvorrichtung ausgetauscht werden muss und daher dauerhaft verwendet werden kann. Auch die Duftmittelaustragseinrichtung kann üblicherweise einfach ausgebildet werden, so dass auch hier die Kosten bei einem Austausch der gesamten Duftmittelvorratsvorrichtung nicht übermäßig ansteigen müssen.

Alternativ oder zusätzlich wird vorgeschlagen, eine Duftmittelvorratsvorrichtung mit zumindest einem Informationsspeichermittel zu versehen, welches insbesondere als elektronisches Informationsspeichermittel ausgebildet ist. Bei den gespeicherten Informationen kann es sich beispielsweise um die Art des Duftstoffs, um die Füllmenge, um das Herstellungsdatum, um das Verfallsdatum, um eine Chargennummer, um die Duftintensität des Duftmittels, um eine sonstige Stoffcharakteristik des Duftmittels, um sonstige Produktinformationen, um den Hersteller und/oder um Dosierungshinweise handeln. Als Informationsspeichermittel können zum Beispiel einfache Papieretiketten, aber auch beispielsweise elektronische Chips oder sonstige elektronische, magnetische und/oder optische Speichermedien eingesetzt werden. Insbesondere ist es auch möglich, dass die im Informationsspeichermittel gespeicherten Informationen während des Betriebs der Duftmittelvorratsvorrichtung bzw. während des Betriebs der Beduftungsvorrichtung, in die die Duftmittelvorratsvorrichtung eingesetzt ist, geändert werden. Hierbei kann es sich insbesondere um einen Befüllungszustand der Duftmittelbehältereinrichtung, um die Anzahl der Betriebsstunden, um ein Einsatzprofil, um die Einsatzhistorie und/oder um einen Einsatzort (z.B. basierend auf Daten, die von einem Navigationssystem zur Verfügung gestellt werden) handeln. Die Informationen können derart angezeigt werden, dass sie von einem Menschen direkt gelesen werden können. Dies ist beispielsweise der Fall, wenn es sich bei dem Informationsspeichermittel um ein einfaches Papieretikett handelt. Zur Erkennung des Füllstands ist es auch möglich, die Duftmittelbehältereinrichtung mit einem Fenster zu versehen und/oder zumindest teilweise aus einem transparenten bzw. durchsichtigen Material zu fertigen. Die Diagnose des Füllstands kann dann beispielsweise optoelektronisch erfolgen. Es kann sich jedoch auch als sinnvoll erweisen, wenn die Informationen von einem entsprechenden Informationsübertragungsmittel ausgelesen werden, und die von dem Informationsübertragungsmittel ausgelesenen Informationen für eine automatische Steuerung genutzt werden bzw. von dem Informationsübertragungsmittel mittelbar an eine Person weitergeleitet werden. Bevorzugt handelt es sich bei dem Informationsübertragungsmittel um ein elektronisches Informationsübertragungsmittel. Ein derartiges mechanisiertes Auslesen bzw. Übertragen von Informationen kann beispielsweise durch eine optische Kamera, einen Barcode, einen 2-D Code, einen RFID-Chip (RFID für Radio Frequency IDentification), durch eine Bluetooth-Übertragung oder durch kontaktbehaftete elektrische Signale erfolgen. Insbesondere ist es auch denkbar, dass eine Informationsübertragung nicht nur unidirektional, sondern insbesondere auch bidirektional erfolgt. Z.B. können auf diese Weise Ortskoordinaten eines Navigationssystems an die Duftmittelvorratsvorrichtung übertragen werden. Die auf dem Informationsspeichermittel gespeicherten Informationen können auch - zumindest teilweise - in verschlüsselter Form gespeichert sein. Dadurch ist es besonders gut möglich, die Produktauthentizität sicherzustellen und Fälschungen zu erschweren. Darüber hinaus ist es auch möglich, gewisse Informationen zu speichern, die vom Benutzer nicht aktiv gelesen und/oder verändert werden können sollen. Beispielsweise kann das Benutzerverhalten (Anzahl der Eingriffe, Öffnen der Beduftungsvorrichtung, Zahl der Einschaltvorgänge, Betriebsstunden usw.) gespeichert werden, um nötigenfalls bei einem Garantiefall ausgelesen und verwendet werden zu können.

Es kann sich als vorteilhaft erweisen, wenn die Koppelungseinrichtung als Antriebskoppelungseinrichtung ausgeführt ist. Mit Hilfe derartiger Koppelungseinrichtungen kann die Betätigung der Duftmittelvorratsvorrichtung (insbesondere der Duftmittelaustragseinrichtung) auf besonders einfache, verschleißarme, kostengünstige und/oder beschädigungsunempfindliche (insbesondere beim Austausch der Duftmittelvorratsvorrichtung) Weise ausgeführt werden. Eine magnetische Koppelungseinrichtung wird dadurch realisiert, dass eine Kraft bzw. eine Bewegung unter Vermittlung magnetischer Kräfte von der Aktuatoreinrichtung an die Duftmittelaustragseinrichtung übertragen wird. Die kann beispielsweise durch eine einfache Nebeneinanderanordnung von Aktuatoreinrichtung und Duftmittelaustragseinrichtung realisiert werden. Die magnetischen Kräfte können dann einfach über einen Luftspalt übertragen werden. Möglich ist es jedoch auch, ein die Koppelung verstärkendes Bauteil zu verwenden. Im Falle einer magnetischen Koppelungseinrichtung könnte beispielweise ein die Magnetfeldlinien leitender Kern aus einem weichmagnetischen Material vorgesehen werden. Bei einer Antriebskoppelungseinrichtung kann insbesondere eine mechanische Bewegung, wie beispielsweise eine Drehbewegung, von der Aktuatoreinrichtung an die Duftmittelaustragseinrichtung übertragen werden. Dadurch kann auf einfache Weise ein Antrieb der Duftmittelaustragseinrichtung realisiert werden.

Es ist möglich, die Duftmittelvorratsvorrichtung, insbesondere zumindest eine Duftmittelbehältereinrichtung und/oder zumindest eine Duftmittelaustragseinrichtung zumindest teilweise wieder befüllbar und/oder zumindest teilweise rezyklierbar auszuführen. In diesem Zusammenhang ist insbesondere an eine Wiederbefüllung bzw. eine Rezyklierung beim Hersteller der Duftmittelvorratsvorrichtung, bzw. bei einem Servicepartner des Herstellers der Duftmittelvorratsvorrichtung zu denken. Dort ist es nämlich möglich, die Wiederbefüllung der Duftmittelvorratsvorrichtung unter sterilen Bedingungen durchzuführen. Insbesondere ist es möglich, dabei Bauteile, die in Bezug auf eine Verkeimung besonders kritisch sind, auszutauschen bzw. zu sterilisieren. Dadurch können einerseits Kosten gespart werden, andererseits kann eine aus hygienischer Sicht unbedenkliche Beduftungsvorrichtung ermöglicht werden. Die Duftmittelvorratsvorrichtung kann dann beispielsweise als bepfandetes Bauteil in Umlauf gebracht werden.

Die Duftmittelaustragseinrichtung weist eine Verdunstungsvorrichtung, insbesondere eine verdunstungsflächenbewegte Verdunstungsvorrichtung, insbesondere eine Rotationsverdunstungsvorrichtung auf. Derartige Baugruppen haben sich für das Verdunsten von Flüssigkeiten bewährt und sind darüber hinaus in der Regel kostengünstig verfügbar. Auch kommt es bei einer Verdunstung von Flüssigkeiten - verglichen beispielsweise mit einem Versprühen von Flüssigkeiten - zu einem deutlich reduzierten Übertritt von Keimen. Das Vorsehen von derartigen Verdunstungsvorrichtungen weist also aus hygienischer Sicht deutliche Vorteile auf. Unter einer verdunstungsflächenbewegten Verdunstungsvorrichtung ist eine Vorrichtung zu verstehen, bei der die Teile der Verdunstungsvorrichtung, welche die Verdunstung des zu verdunstenden Duftmittels bewirken bzw. von denen aus das Duftmittel verdunstet, abwechselnd in den flüssigen Duftmittelvorrat eintauchen (oder auf andere Weise vom flüssigen Duftmittel benetzt werden) und in die Nähe der zu beduftenden Luft gebracht werden. Dadurch ist es nicht erforderlich, dass Flüssigkeit über eine gegebenenfalls größere Wegstrecke durch einen Werkstoff hindurchgesaugt werden muss (was selbstverständlich ebenfalls denkbar ist). Vielmehr ist es ausreichend , wenn der betreffende Werkstoff flüssigkeitsbenetzbar ist. Sinnvoll ist es insbesondere, wenn die Benetzung mit Duftmittel und die Verdunstung des Duftmittels in einem kontinuierlichen Prozess erfolgt, wie es mit einer Rotationsverdunstungsvorrichtung erreicht wird. Eine solche Rotationsverdunstungsvorrichtung weist eine rotierende Scheibe auf, die im Zuge eines Umlaufs in einem gewissen Winkelbereich in das flüssige Duftmittel eintaucht und in einem anderen Winkelbereich einer zu beduftenden Luftströmung ausgesetzt wird. Ein weiterer Vorteil der Verdunstung ist, dass keine alveolengängigen Tröpfchen in den Fahrgastinnenraum bzw. in weiterer Folge in die Lunge der Insassen gelangt.

Weiterhin kann es sich als sinnvoll erweisen, wenn die Duftmittelvorratsvorrichtung eine Verschlusseinrichtung aufweist, welche insbesondere als reversible Verschlusseinrichtung ausgebildet ist. Die Verschlusseinrichtung kann beispielsweise als ein von einer Klappe verdecktes Fenster ausgeführt sein. Die Klappe kann beispielsweise als Drehklappe oder als Schiebeklappe ausgeführt sein. Möglich ist es, dass die Klappe beispielsweise durch eine Feder oder ein anderes elastisches Element in eine Stellung bewegt wird, in der das Fenster verschlossen ist. Durch eine entsprechende Mechanik kann beim Einschieben der Duftmittelvorratsvorrichtung in den Aufnahmeraum einer Beduftungsvorrichtung die Verschlussklappe automatisch geöffnet werden, während das Fenster beim Entfernen der Duftmittelvorratsvorrichtung aus der Beduftungsvorrichtung durch die Federkraft selbsttätig wieder geschlossen werden kann.

Ebenfalls kann es sich als sinnvoll erweisen, wenn die Duftmittelvorratsvorrichtung wenigstens ein Verrastmittel zur Verrastung in einem Aufnahmebereich für die Duftmittelvorratsvorrichtung aufweist. Dabei kann es sich beispielsweise um Nuten, hinterschnittene Vorsprünge oder dergleichen handeln. Als besonders sinnvoll kann es sich auch erweisen, wenn die Duftmittelvorratsvorrichtung eine Führungsnut, einen vorspringenden Stift und/oder ein Federmittel für ein sogenanntes Push-Push-System aufweist. Die Duftmittelvorratsvorrichtung kann dann durch einfaches Eindrücken in ihrem dafür vorgesehenen Aufnahmebereich verrastet werden, und durch nochmaliges Drücken wieder entriegelt werden, um anschließend aus dem Aufnahmebereich wieder entnommen werden zu können. Derartige Push-Push-Systeme sind insbesondere von Kugelschreibern her bekannt.

Weiterhin wird eine Beduftungsvorrichtung vorgeschlagen, die wenigstens eine Duftmittelvorratsvorrichtung mit dem oben beschriebenen Aufbau aufweist. Die Beduftungsvorrichtung ist dabei insbesondere als Beduftungsvorrichtung für ein Fahrzeug, vorzugsweise als Beduftungsvorrichtung für ein Kraftfahrzeug ausgebildet. Vorzugsweise ist zumindest eine Duftmittelvorratsvorrichtung der Beduftungsvorrichtung austauschbar ausgeführt. Bei dem Fahrzeug (Kraftfahrzeug) kann es sich sowohl um ein Wasserfahrzeug, um ein Luftfahrzeug, als auch um ein Landfahrzeug (schienengebunden/nichtschienengebunden) handeln. Eine derartige Beduftungsvorrichtung kann entsprechend der obigen Ausführungen weitergebildet werden. Die Beduftungsvorrichtung weist dann die bereits beschriebenen Vorteile und Eigenschaften in analoger Weise auf.

Alternativ oder zusätzlich wird vorgeschlagen, eine Beduftungsvorrichtung mit wenigstens einem Informationsübertragungsmittel zu versehen. Mit Hilfe eines derartigen Informationsübertragungsmittels kann beispielsweise die in einem Informationsspeichermittel gespeicherte Information automatisiert ausgelesen werden. Die derart gewonnene Information kann anschließend von der Beduftungsvorrichtung für die Beduftung des Fahrzeuginnenraums benutzt werden, bzw. an einen Fahrzeuginsassen weitergegeben werden. Das Informationsübertragungsmittel ist dabei bevorzugt als elektronisches Informationsübertragungsmittel ausgebildet. Das Informationsübertragungsmittel kann beispielsweise eine optische Kamera, einen Barcodescanner, einen 2-D Code-Scanner, eine RFID-Übertragungsstrecke, eine Bluetooth-Übertragungsvorrichtung und/oder eine kontaktbehaftete elektrische Signal-übertragungseinrichtung aufweisen. Insbesondere ist es auch denkbar, dass eine Informationsübertragung nicht nur unidirektional, sondern insbesondere auch bidirektional erfolgt. Die übertragenen Informationen, bzw. Informationen, welche auf den übertragenen Informationen basieren, können dem Benutzer der Vorrichtung über ein beliebiges Informationsdarstellungsmittel, wie beispielsweise über ein Display, über Anzeigeleuchtmittel, über eine akustische Rückmeldung usw. dargestellt werden. Möglich ist es im Übrigen auch, dass die Datenübertragung des Informationsübertragungsmittels zumindest teilweise und/oder zumindest zeitweise verschlüsselt erfolgt. Auch dadurch kann die Produktsicherheit bzw. die Sicherheit gegenüber unzulässigen Manipulationen nochmals gesteigert werden.

Es kann sich als sinnvoll erweisen, die Beduftungsvorrichtung mit wenigstens einem Aufnahmeraum und/oder wenigstens einem Verrastmittel zur Aufnahme wenigstens einer Duftmittelvorratsvorrichtung zu versehen. Dies kann auf unterschiedliche Weise geschehen. Insbesondere können die Aufnahmeräume als eine Art Schublade ausgeführt werden, in die die Duftmittelvorratsvorrichtung(en) eingelegt werden kann (können). Auch können die Duftmittelvorratsvorrichtungen als Ganzes in den Aufnahmeraum der Beduftungsvorrichtung eingeschraubt werden, über ein zusätzliches Bauteil verclipst werden, oder über eine Kippbewegung im Aufnahmeraum der Beduftungsvorrichtung verankert werden. Besonders vorteilhaft kann es jedoch sein, den Aufnahmeraum sowie das Verrastmittel der Beduftungsvorrichtung derart auszubilden, dass es mit einem Verrastmittel einer Duftmittelvorratsvorrichtung derart zusammenwirkt, dass sich eine Push-Push-Lösung zum Arretieren und anschließenden Lösen der Duftmittelvorratsvorrichtung im dazu korrespondierenden Aufnahmeraum der Beduftungsvorrichtung ergibt.

Insbesondere ist es möglich, die Beduftungsvorrichtung mit wenigstens einer Luftbeeinflussungseinrichtung zu versehen, insbesondere mit wenigstens einer Luftfördereinrichtung, wenigstens einer Lufttemperaturänderungseinrichtung und/oder wenigstens einer Luftverwirbelungseinrichtung. Bei der Luftfördereinrichtung kann es sich beispielsweise um einen Ventilator bzw. um ein Gebläse handeln. Dadurch kann ein variabler Luftdurchsatz, und damit eine speziellen Benutzervorgaben genügende Beduftung des Fahrzeuginnenraums erfolgen. Weiterhin kann eine Lufttemperaturänderungseinrichtung, wie beispielsweise ein Heizelement oder ein Kühlelement (beispielsweise ein Wärmetauscher) vorgesehen werden. Durch derartige Vorrichtungen kann die aus der Beduftungsvorrichtung austretende Luft auf das gleiche Temperaturniveau gebracht werden, wie es im Fahrzeuginneren vorherrscht. Darüber hinaus ist es möglich, dass beispielsweise durch ein Erwärmen der Luft die Intensität des Dufts gesteigert bzw. vergleichmäßigt (Duftauthentizität) wird. Bei einer Luftverwirbelungseinrichtung kann es sich um Luftleitelemente, Prallplatten oder ähnliche Vorrichtungen handeln. Mit Hilfe einer derartigen Luftverwirbelung kann eine besonders gleichmäßige Verteilung des Duftstoffs im Luftstrom nochmals gefördert werden.

Es kann sich als vorteilhaft erweisen, wenn zumindest eine Aktuatorvorrichtung zumindest teilweise als Motoreinrichtung, insbesondere als Elektromotoreinrichtung ausgebildet ist. Bei dem Motor kann es sich insbesondere um einen Kollektormotor oder um einen Schrittmotor handeln. Dieser kann gegebenenfalls auch ein Getriebe aufweisen, mit dem beispielsweise eine hohe Drehzahl des Motors heruntergesetzt werden kann. Mit Hilfe einer solchen geeigneten, zu einer Duftmittelaustragseinrichtung der Duftmittelvorratsvorrichtung korrespondierend ausgebildeten Aktuatoreinrichtung, kann die Beduftungsvorrichtung beispielsweise einen gesteuerten, variablen, stoßweisen und/oder intervallartigen Duftmittelaustrag erzeugen. Die Zeiträume, die zwischen zwei Duftstößen liegen, können beispielsweise zwischen 1 und 2 Minuten liegen. Die Länge der einzelnen Duftstöße beträgt vorzugsweise zwischen 0,1 und 10 Sekunden. Es kann vorgesehen werden, dass die Länge der Zeitdauern zwischen einzelnen Duftstößen und/oder die Länge der einzelnen Duftstöße vom Benutzer eingestellt werden kann. Dies kann völlig frei, aber auch mittels fest vorgegebener Stufungen realisiert werden, die vom Benutzer ausgewählt werden können. Dafür können geeignete Bedienelemente vorgesehen werden. Zusätzlich oder alternativ kann vorteilhaft auch die Intensität der Duftstöße variiert werden, beispielsweise durch höhere Abgabemengen pro Duftstoß.

Möglich ist es auch, dass die Beduftungsvorrichtung mit einer Mehrzahl von Aufnahmeräumen zur Aufnahme von Duftmittelvorratsvorrichtungen ausgebildet wird. Vorzugsweise sind aus Platzgründen nicht mehr als fünf Aufnahmeräume zur Aufnahme von Duftmittelvorratsvorrichtungen vorgesehen. Eine sinnvolle Anzahl kann sich aber auch mit zwei, drei und/oder vier verschiedenen Aufnahmeräumen ergeben.

Vorzugsweise verfügt die Beduftungsvorrichtung über zumindest eine Duftauswahleinrichtung. Dies kann beispielsweise in Form von Verschlussklappen realisiert werden, die die Duftabgabeöffnungen der Duftmittelvorratsvorrichtungen abdecken oder freigeben können. Auch ist es möglich, dass die Duftfreisetzung der Duftauswahleinrichtung durch ein Öffnen bzw. ein Verschließen von Luftkanälen erfolgt, die die zu beduftende Luft an einem Bereich in der Nähe der Duftabgabeöffnungen der Duftmittelvorratsvorrichtungen vorbeileiten. Vorzugsweise ist das System so aufgebaut, dass vom Benutzer immer nur ein einzelner Duft angewählt werden kann. Dazu können geeignete Bedienelemente vorgesehen werden. Sofern die in die Aufnahmeräume eingelegten Duftmittelvorratsvorrichtungen Grundduftrichtungen enthalten, kann es aber auch ermöglicht werden, zwei oder mehrere Düfte gleichzeitig auszuwählen, um so eine Vielzahl von Duftkompositionen zu ermöglichen. Eine derartige Mischstellung kann beispielsweise dann freigegeben werden, wenn das Informationsübertragungsmittel festgestellt hat, dass sich in den Duftmittelvorratsvorrichtungen Duftmittel mit Grundduftrichtungen befinden, die sinnvoll miteinander vermischt werden können.

Vorzugsweise ist die Beduftungsvorrichtung im Bereich eines Armaturenbretts eines Fahrzeugs angeordnet, insbesondere bevorzugt benachbart einem Luftausströmer. Beim Luftausströmer kann es sich beispielsweise um die Mitteldüse handeln, so dass der Duftstoff zentral im Frontbereich des Fahrzeugs in den Fahrzeuginnenraum gelangt und sich von dort aus verteilt. Insbesondere bevorzugt ist die Beduftungsvorrichtung mit dem zum Luftausströmer führenden Luftkanal oder einem separaten Luftkanal welcher von einer Heizungs- oder Klimaanlage abzweigt verbunden, so dass Luft vom Luftkanal direkt in die Beduftungsvorrichtung einströmen kann und hier mit dem entsprechenden Duftstoff versetzt werden kann, bevor sie die Beduftungsvorrichtung über die Austrittsöffnung wieder verlässt. Eine gesonderte Luftfördereinrichtung kann dann gegebenenfalls entfallen, da die Luftförderung durch die Luftfördereinrichtung, wie beispielsweise dem Radialgebläse der Heizungs- oder Klimaanlage erfolgen kann.

Im Folgenden wird die Erfindung unter Verwendung einzelner ausgewählter Ausführungsbeispiele und unter Verweis auf die beigefügten Figuren näher beschrieben. Es zeigen:
- Fig. 1:: Ein erstes Ausführungsbeispiel für eine Beduftungsvorrichtung in perspektivischer Ansicht;
- Fig. 2:: ein Ausführungsbeispiel für eine Duftmittelkartusche in perspektivischer Ansicht;
- Fig. 3:: die in Fig. 2 gezeigte Duftmittelkartusche im schematischen Querschnitt;
- Fig. 4:: ein Ausführungsbeispiel für eine Vorrichtung zur Duftselektion in perspektivischer Ansicht;
- Fig. 5:: die in Fig. 4 gezeigte Vorrichtung zur Duftselektion in Draufsicht von vorne;
- Fig. 6:: das in Fig.1 gezeigte Ausführungsbeispiel mit der in Fig.4 dargestellten Vorrichtung ohne Gehäuse in perspektivischer Ansicht;
- Fig. 7:: das in Fig.1 gezeigte Ausführungsbeispiel mit der in Fig.4 dargestellten Vorrichtung mit Gehäuse in perspektivischer Ansicht;

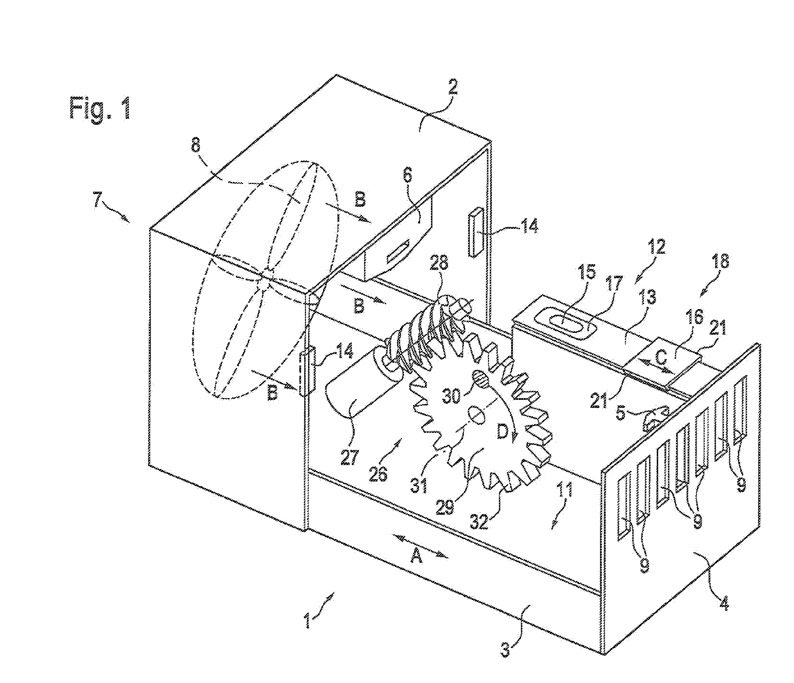

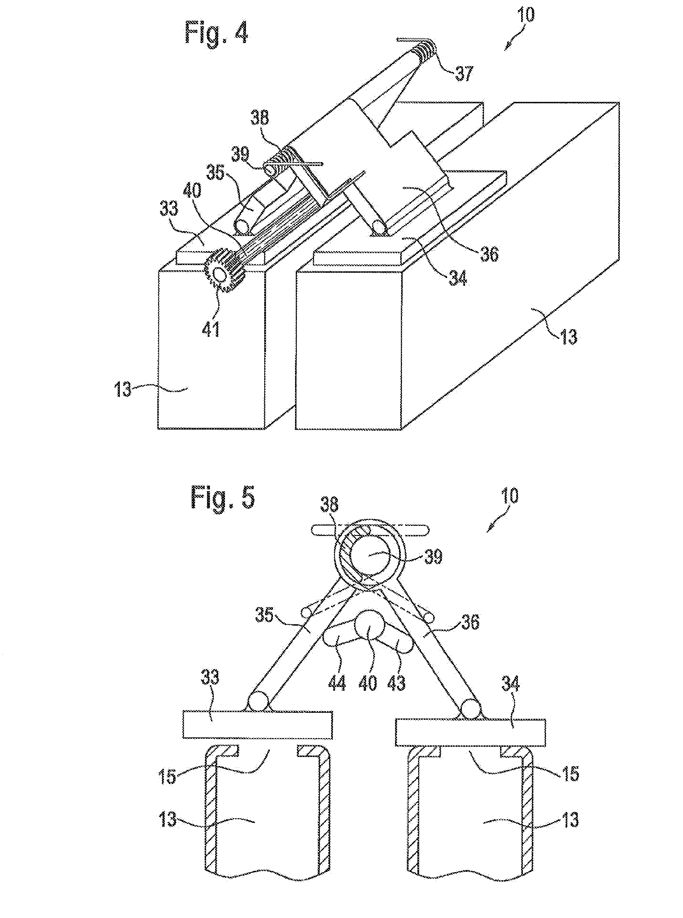

In Fig. 1 ist eine Beduftungsvorrichtung 1 zur Beduftung eines Kraftfahrzeuginnenraums in perspektivischer Ansicht dargestellt. Aus Veranschaulichungsgründen sind die Komponenten schematisch dargestellt und es wurde zum Teil auf die Darstellung von Details verzichtet. Insbesondere ist bei der in Fig. 1 dargestellten Beduftungsvorrichtung 1 die Duftselektionseinrichtung 10 aus zeichnerischen Gründen nicht dargestellt. Die Funktion der Duftselektionseinrichtung 10 wird jedoch im Zusammenhang mit den Fig. 4 und Fig. 5 näher erläutert.

Die Beduftungsvorrichtung 1 weist ein kastenartiges Gehäuse 2 auf, in dem eine Schublade 3 in Pfeilrichtung A verschiebbar gelagert ist. An der Stirnwand 4 der Schublade 3 ist in einem oberen Bereich 18 eine Rastnase 5 angeordnet, die mit einem am Gehäuse 2 angeordneten Koppelelement 6 zusammenwirkt. Rastnase 5 und Koppelelement 6 bilden zusammen ein sogenanntes Push-Push-Verbindungsystem aus. Dass heißt, dass die Schublade 3 durch einen Druck auf die Stirnwand 4 in ihrer Verschlussstellung verrastet werden kann. Soll die Schublade 3 wieder geöffnet werden, so wird zur Lösung der Verrastung von Rastnase 5 und Koppelelement 6 erneut ein Druck auf die Stirnwand 4 der Schublade 3 ausgeübt, wodurch die Schublade 3 freigegeben wird. Derartige Push-Push-Systeme sind beispielsweise bei Kugelschreibern weit verbreitet.

In einem hinteren Bereich 7 des Gehäuses 2 ist ein Gebläse 8 angeordnet, welches einen Luftstrom B, der durch das Gehäuse 2 hindurch läuft, erzeugen kann. Damit der vom Gebläse 8 erzeugte Luftstrom B das Gehäuse 2 verlassen kann, sind in der Stirnwand 4 der Schublade 3 mehrere Luftdurchlassöffnungen 9 vorgesehen.

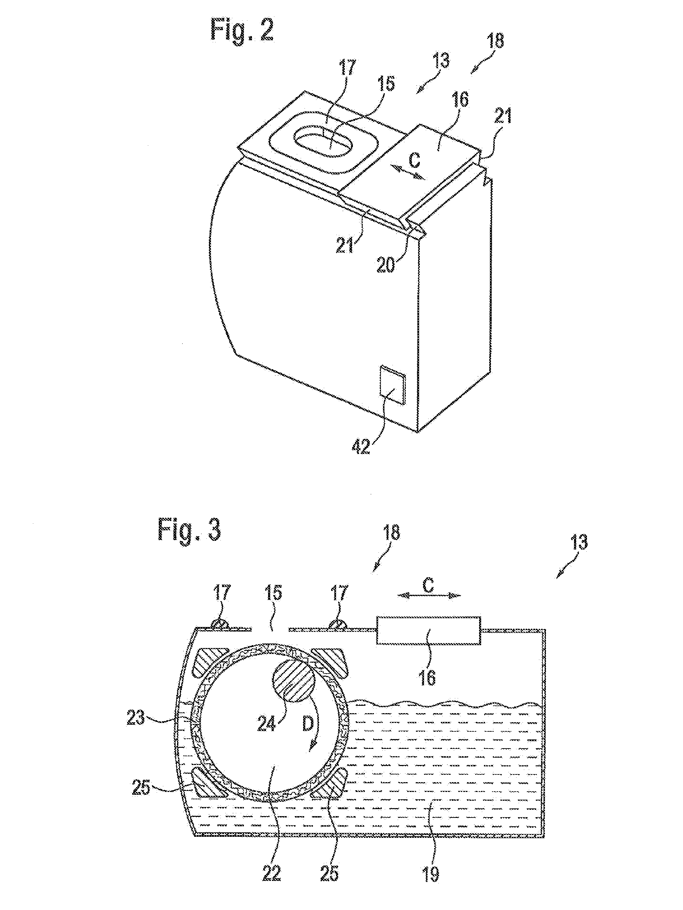

In der Schublade 3 sind die für die Beduftung des durch das Gehäuse 2 hindurch strömenden Luftstroms B dienenden Duftmittelkartuschen 13 angeordnet. Zu beiden Seiten der Schublade 3 ist jeweils ein Aufnahmebereich 11, 12 für jeweils eine Duftmittelkartusche 13 vorgesehen. Üblicherweise wird in beide Aufnahmebereiche 11, 12 jeweils eine Duftmittelkartusche 13 eingesetzt. In Fig.1 ist aus Übersichtlichkeitsgründen jedoch nur eine Duftmittelkartusche 13 eingezeichnet. Der Aufbau und die Funktionsweise der Duftmittelkartusche 13 wird im Zusammenhang mit den Fig. 2 und 3 näher erläutert.

Auf der Oberseite 18 der Duftmittelkartusche 13 ist die Duftabgabeöffnung 15 zu erkennen, über die das in der Duftmittelkartusche 13 gespeicherte, ursprünglich flüssige Duftmittel 19 austreten kann, um sich mit der Luftströmung B zu vermischen. Die Duftabgabeöffnung 15 ist im Normalfall von einem Verschlussdeckel 16 verschlossen, der in Pfeilrichtung C verschoben werden kann. Dazu hinter greifen die randseitigen Bereiche 21 des Verschlussdeckels 16 jeweils eine schwalbenschwanzartige Nut 20 ein, die in der Nähe der Oberseite 18 der Duftmittelkartusche 13 angeordnet ist. Der Verschlussdeckel 16 ist federbelastet und verdeckt die Duftmittelöffnung 15, sofern keine äußeren Kräfte auf ihn einwirken (in der in Fig. 1 dargestellten Anordnung würde folglich der Verschlussdeckel 16 die Duftabgabeöffnung 15 überdecken. Um ein unerwünschtes Austreten von Duftmittel bei verschlossenem Verschlussdeckel 16 zu vermeiden, ist um die Duftabgabeöffnung 15 herum ein Dichtring 17 angeordnet. Der Dichtring 17 bewirkt in Kombination mit dem Verschlussdeckel 16 einen gasdichten Verschluss der Duftmittelkartusche 13. Wird die Schublade 3 mit der darin angeordneten Duftmittelkartusche 13 in das Gehäuse 2 der Beduftungsvorrichtung 1 eingeschoben, so berühren Vorsprünge 14, die am Gehäuse 2 angeordnet sind, einen Randbereich des Verschlussdeckels 16 und schieben diesen auf, sodass die Duftabgabeöffnung 15 der Duftmittelkartusche 13 offen ist (sofern sie nicht von der Duftselektionseinrichtung 10 - vergleiche Fig. 4, Fig. 5 verschlossen wird).

Im Inneren der Duftmittelkartusche 13 ist eine Drehscheibe 22 angeordnet, welche beispielsweise aus einem Kunststoffmaterial ausgebildet sein kann. In der Drehscheibe 22 ist, asymmetrisch zum Mittelpunkt der Drehscheibe 22 versetzt, ein Magnet 24 angeordnet. Radial außen ist die Drehscheibe 22 mit einer hydrophilen Beschichtung 23 versehen. Beispielsweise kann es dabei um ein Filzmaterial 23 handeln. Die Drehscheibe 22 ist radial außen durch eine Anzahl von Stützelementen 25 gelagert. Weiterhin ist das Innere der Duftmittelkartusche 13 mit einem flüssigen Duftmittel 19 gefüllt.

Wird die Drehscheibe 22 durch einen äußeren Aktuator 27, 29 in eine Drehbewegung D versetzt, so werden die Teilbereiche des Filzes 23, die sich im Bad aus flüssigem Duftmittel 19 befinden durch die Drehbewegung D der Drehscheibe 22 in den Bereich der Duftabgabeöffnung 15 bewegt. Dort kann das vom Filz 23 aufgesaugte flüssige Duftmittel 19 verdunsten und schlussendlich an die Luftströmung B, die das Gehäuse 2 der Beduftungsvorrichtung 1 durchströmt, abgegeben werden. Die derart beduftete Luft B verlässt die Beduftungsvorrichtung über die Luftauslassöffnungen 9, die in der Stirnwand 4 der Schublade 3 der Beduftungsvorrichtung 1 vorgesehen sind. Darüber hinaus werden die Teile des Filzes 23, die sich benachbart zur Duftabgabeöffnung 15 befinden, durch die Drehbewegung D der Drehscheibe 22 nach kurzer Zeit (erneut) in das Bad aus flüssigem Duftmittel 19 getaucht. Somit wird ein Austrocknen des Filzes 23 verhindert, was schlussendlich zu einer verminderten Beduftungsleistung der Beduftungsvorrichtung 1 führen würde.

Als Aktuator 26 dient, wie man insbesondere in Fig. 1 erkennen kann, ein Elektromotor 27, welcher über eine Gewindespindel 28 in die Verzahnung 32 eines Zahnrads 29 eingreift, und das Zahnrad 29 dementsprechend in eine Drehbewegung D versetzt. Das Zahnrad 29 ist drehbar um eine Mittelachse 31 gelagert. Asymmetrisch zur Mittelachse 31 versetzt ist im Zahnrad 29 ein Dauermagnet 30 vorgesehen. Dieser Dauermagnet 30 des Zahnrads 29 interagiert über magnetische Kräfte mit den Magneten 24 der in den Duftmittelkartuschen 13 befindlichen Drehscheiben 22. Somit werden die Drehscheiben 22 vom Aktuator 26 in eine Drehbewegung D versetzt.

Damit auch bei zwei in die Schublade 3 der Beduftungsvorrichtung 1 eingesetzten Duftmittelkartuschen 13 jeweils nur ein Duft freigesetzt wird (in Abhängigkeit von einer Benutzereingabe) und die Duftabgabe darüber hinaus in zeitlich voneinander beabstandeten, stoßweisen Zyklen erfolgen kann, ist in der Beduftungsvorrichtung 1 zusätzlich eine Duftselektionseinrichtung 10 vorgesehen. Diese Duftselektionsvorrichtung 10 ist in einem oberen Bereich 18 des Gehäuses 2 der Beduftungsvorrichtung 1 eingesetzt, jedoch aus Übersichtlichkeitsgründen in Fig. 1 nicht dargestellt. Aufbau und Funktion eines möglichen Ausführungsbeispiels für eine Duftselektionseinrichtung 10 ist in Fig. 4 und Fig. 5 dargestellt.

Sofern sich in den Duftmittelkartuschen 13 Grunddüfte befinden, wird über eine entsprechende Logik für den Benutzer auch eine Schaltstellung freigeschaltet, bei der mehrere Duftkartuschen 13 "gleichzeitig" angesteuert werden. Dies ist beispielsweise dadurch möglich, dass die Duftselektionseinrichtung 10 die jeweiligen, in den Kartuschen 13 befindlichen Duftmittel 19 wechselweise freisetzt. Um diese Funktionalität zu ermöglichen, ist in den Duftmittelkartuschen 13 jeweils ein RFID-Chip 42 (RFID für Radio Frequency Identification) vorgesehen, in dem Informationen über das in der jeweiligen Duftmittelkartusche 13 vorhandene Duftmittel 19 gespeichert ist. Die im RFID-Chip 42 gespeicherte Information kann auf drahtlosem Wege ausgelesen werden. Dies kann beispielsweise mittels einer Leseschleife erfolgen. Zusätzlich können im RFID-Chip 42 auch weitere Informationen, wie beispielsweise das Herstelldatum, das Verfallsdatum, der aktuelle Befüllungsgrad usw. gespeichert sein.

Die von der Leseschleife aus dem RFID-Chip 42 ausgelesenen Informationen werden an die elektronische Steuerung weitergegeben. Diese nutzt die gewonnenen Informationen beispielsweise für die Ansteuerung der Beduftungsvorrichtung 1. Darüber hinaus kann auch der Benutzer über ein Display über den Befüllungsstand des Duftmittelkartusche 13 informiert werden und gegebenenfalls gesondert auf einen in Kürze erforderlich werdenden Tausch der Duftmittelkartusche 13 hingewiesen werden.

Das vorliegend dargestellte Ausführungsbeispiel der Duftselektionseinrichtung 10 besteht im Wesentlichen aus zwei Verschlussklappen 33, 34, die drehbar jeweils an einem Anlenkhebel 35, 36 gelagert sind. Die Anlenkhebel 35, 36 sind jeweils drehbar an einem Haltestift 39 befestigt und sind jeweils durch eine Anpressfeder 37, 38 die die Verschlussplatten 33, 34 in einen nach unten gerichtete Anpressrichtung zu bewegen versucht, vorgespannt. Wenn die Schublade 3 in das Gehäuse 2 der Beduftungsvorrichtung 1 eingeschoben und verrastet ist, liegen die Verschlussplatten 33, 34 im Bereich der Duftabgabeöffnungen 15 der Duftmittelkartuschen 13. Die Verschlussplatten 33, 34 der Duftselektionseinrichtung 10 können daher die Duftabgabeöffnungen 15 der Duftmittelkartuschen 13 luftdicht verschließen.

In der Mitte, zwischen den beiden Anlenkhebel 35, 36, ist eine drehbare Welle 40 angeordnet, welche beispielsweise über ein stirnseitig angeordnetes Zahnrad 41 gedreht werden kann. Dazu kann beispielsweise ein Schrittmotor dienen. Wie insbesondere aus Fig. 5 ersichtlich ist, sind seitlich an der drehbaren Welle 40 zwei Flügel 44, 43 vorgesehen. Wird die drehbare Welle 40 gedreht, so werden die Flügel 44, 43 dementsprechend verschwenkt. Ist die Verschwenkbewegung ausreichend groß, so tritt einer der beiden Flügel 44, 43 mit einem der beiden Anlenkhebel 35, 36 in Kontakt und hebt eine der Verschlussplatten 33, 34 von der dazu korrespondierenden Duftabgabeöffnung 15. Auf diese Weise ist es möglich den gewünschten Duft auszuwählen und freizusetzen. Bei zyklischer Ansteuerung der drehbaren Welle 40 kann auch eine intervallartige Freisetzung des Duftmittels 19 erzielt werden. Je nachdem, wie weit die Verschlussplatten 33, 34 von der dazugehörigen Duftabgabeöffnung 15 abgehoben wird, wird unterschiedlich viel Duftmittel 19 an die durch die Beduftungsvorrichtung 1 durchströmende Luft B abgegeben.

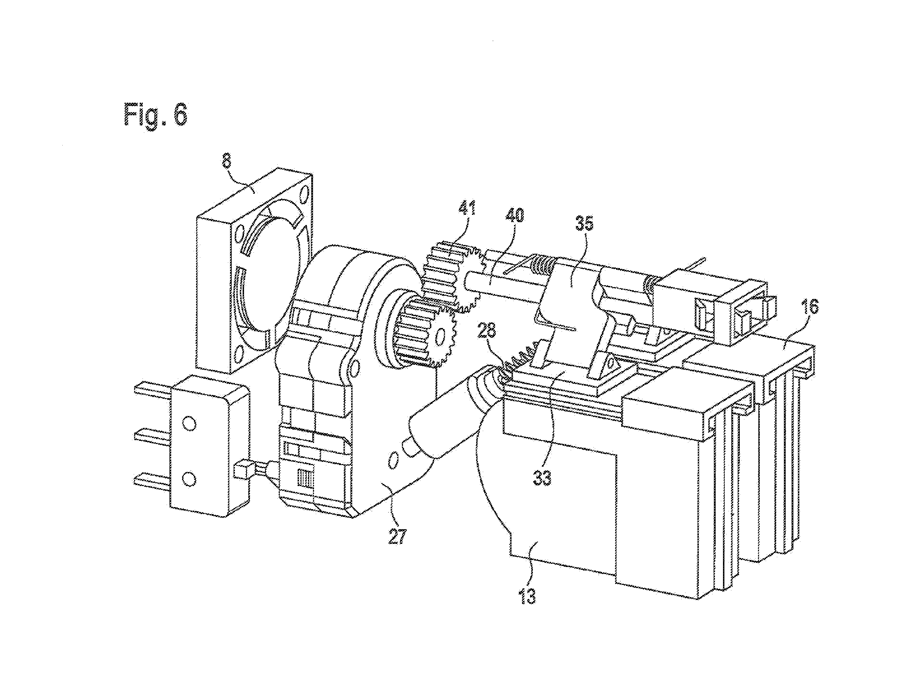

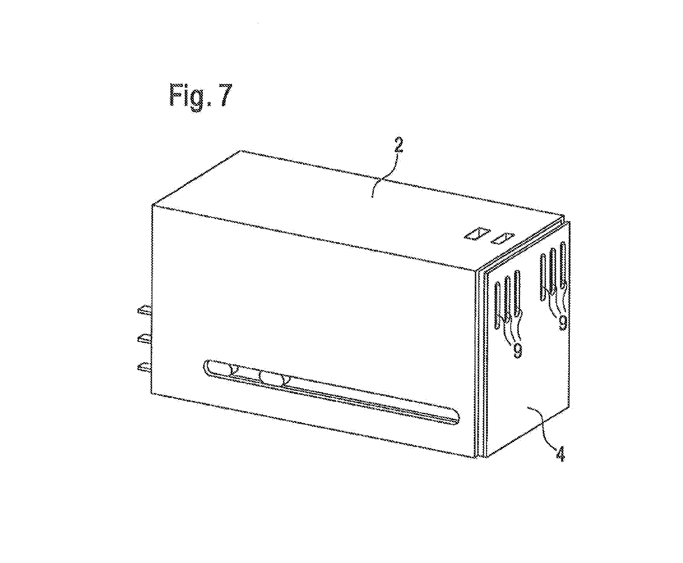

Zur Verdeutlichung der Anordnung der Komponenten in der Beduftungsvorrichtung 1 ist in Fig. 6 die Beduftungsvorrichtung 1 nach Fig.1 mit einer Duftselektionsvorrichtung 10 wiedergegeben. In die entsprechende Beduftungsvorrichtung 1 sind vorliegend zwei Duftmittelkartuschen 13 eingesetzt. Eine Gesamtansicht der Anordnung mit geschlossenem Gehäuse 2 zeigt Fig.7.

## Patentansprüche

1. Duftmittelvorratsvorrichtung (1), aufweisend eine Duftmittelbehältereinrichtung (13), eine Duftmittelaustragseinrichtung (22), die in der Duftmittelbehältereinrichtung angeordnet ist, und eine magnetische Koppelungseinrichtung (24) zur Ankopplung der Duftmittelaustragseinrichtung an wenigstens eine Akutatoreinrichtung (26), die außerhalb der Duftmittelvorratseinrichtung vorgesehen ist, **dadurch gekennzeichnet, dass** die Duftmittelaustragseinrichtung eine radial außen mit einer hydrophilen Beschichtung (23) versehene Drehscheibe (22) ist, in der als Kopplungseinrichtung ein Magnet (24) asymmetrisch zum Mittelpunkt der Drehscheibe versetzt angeordnet ist, welche durch die Aktuatoreinrichtung in Drehbewegung versetzbar ist.

2. Duftmittelvorratsvorrichtung nach Anspruch 1, **gekennzeichnet durch** zumindest ein Informationsspeichermittel (42), welches insbesondere als elektronisches Informationsspeichermittel (42) ausgebildet ist.

3. Duftmitteivorratsvorrichtung (1) nach Anspruch 1 oder 2, **dadurch gekennzeichnet, dass** die wenigstens eine Koppelungseinrichtung (26) als Antriebskoppelungseinrichtung (26) ausgeführt ist.

4. Duftmittelvorratsvorrichtung (1) nach einem der vorangehenden Ansprüche, **dadurch gekennzeichnet, dass** die Duftmittelvorratsvorrichtung (1), insbesondere zumindest die Duftmittelbehältereinrichtung (13) und/oder zumindest die Duftmittelaustragseinrichtung (22) zumindest teilweise wieder befüllbar und/oder zumindest teilweise rezyklierbar ausgeführt ist.

5. Duftmittelvorratsvorrichtung (1) nach einem der vorangehenden Ansprüche, **gekennzeichnet durch** zumindest eine Verschlusseinrichtung (16), insbesondere **durch** zumindest eine reversible Verschlusseinrichtung.

6. Duftmittelvorratsvorrichtung (1) nach einem der vorangehenden Ansprüche, **gekennzeichnet durch** wenigstens ein Verrastmittel (5, 6) zur Verrastung in einem Aufnahmebereich (11, 12) für die Duftmittelvorratsvorrichtung (1).

7. Beduftungsvorrichtung (1) insbesondere Beduftungsvorrichtung für ein Fahrzeug, vorzugsweise Beduftungsvorrichtung für ein Kraftfahrzeug, **gekennzeichnet durch** wenigstens eine Duftmittelvorratsvorrichtung nach einem der Ansprüche 1 bis 6, wobei zumindest eine Duftmittelvorratsvorrichtung vorzugsweise austauschbar ausgeführt ist.

8. Beduftungsvorrichtung (1), insbesondere Beduftungsvorrichtung (1) nach dem Oberbegriff von Anspruch 7, bevorzugt Beduftungsvorrichtung (1) nach Anspruch 7, **gekennzeichnet durch** wenigstens ein Informationsübermittlungsmittel (42), welches insbesondere als elektronisches Informationsübermittlungsmittel (42) ausgebildet ist.

9. Beduftungsvorrichtung (1) nach Anspruch 7 oder 8, **gekennzeichnet durch** wenigstens einen Aufnahmeraum (11, 12) und/oder wenigstens ein Verrastmittel (5, 6) zur Aufnahme wenigstens einer Duftmittelvorratsvorrichtung (1).

10. Beduftungsvorrichtung (1) nach einem der Ansprüche 7 bis 9, **gekennzeichnet durch** wenigstens eine Luftbeeinflussungseinrichtung (8), insbesondere wenigstens eine Luftfördereinrichtung, wenigstens eine Lufttemperaturänderungseinrichtung und/oder wenigstens eine Luftverwirbelungseinrichtung.

11. Beduftungsvorrichtung (1) nach einem der Ansprüche 7 bis 10, **dadurch gekennzeichnet, dass** die zumindest eine Aktuatorvorrichtung (26) zumindest teilweise als Motoreinrichtung (27), insbesondere als Elektromotoreinrichtung, ausgebildet ist.

12. Beduftungsvorrichtung (1) nach einem der Ansprüche 7 bis 11, **gekennzeichnet durch** eine Mehrzahl von Aufnahmeräumen (11, 12) zur Aufnahme von Duftmittelvorratsvorrichtungen (1).

13. Beduftungsvorrichtung (1) nach einem der Ansprüche 7 bis 12, **gekennzeichnet durch** zumindest eine Duftauswahleinrichtung (10).

## Claims

1. A fragrance storage unit (1), comprising a fragrance container device (13), a fragrance discharge unit (22), which is disposed in the fragrance storage unit, and a magnetic coupling device (24) for coupling the fragrance discharge unit to at least one actuator unit (26), which is provided outside the fragrance storage unit, **characterized in that** the fragrance discharge unit is a rotating disk (22) provided, radically outwardly, with a hydrophilic coating (23), in which said rotating disk a magnet (24), as the coupling device, is disposed so as to be symmetrically offset relative to the center point of the rotating disk, which can be set into rotary motion by the actuator unit.

2. The fragrance storage unit according to claim 1, **characterized by** at least one information storage means (42), which is designed, in particular, as an electronic information storage means (42).

3. The fragrance storage unit (1) according to claim 1 or 2, **characterized in that** the at least one coupling device (26) is designed as a drive coupling device (26).

4. The fragrance storage unit (1) according to any one of the preceding claims, **characterized in that** the fragrance storage unit (1), in particular at least the one fragrance storage unit (13) and/or at least the one fragrance discharge unit (22) is at least partially refillable and/or at least partially recyclable.

5. The fragrance storage unit (1) according to any one of the preceding claims, **characterized by** at least one closure device (16), in particular by at least one reversible closure device.

6. The fragrance storage unit (1) according to any one of the preceding claims, **characterized by** at least one latching means (5, 6) for the latching engagement in a receiving region (11, 12) for the fragrance storage unit (1).

7. A scenting device (1), in particular a scenting device for a vehicle, preferably a scenting device for a motor vehicle, **characterized by** at least one fragrance storage unit according to any one of the claims 1 to 6, wherein at least one fragrance storage unit is preferably replaceable.

8. The scenting device (1), in particular the scenting device (1) according to the preamble of claim 7, preferably the scenting device (1) according to claim 7, **characterized by** at least one information transmission means (42), which is designed, in particular, as an electronic information transmission means (42).

9. The scenting device (1) according to claim 7 or 8, **characterized by** at least one receiving chamber (11, 12) and/or at least one latching means (5, 6) for receiving at least one fragrance storage unit (1).

10. The scenting device (1) according to any one of the claims 7 to 9, **characterized by** at least one air influencing device (8), in particular at least one air supply device, art least one air temperature change device, and/or at least one air swirling device.

11. The scenting device (1) according to any one of the claims 7 to 10, **characterized in that** the at least one actuator unit (26) is at least partiality designed as a motor device (27), in particular as an electric motor device.

12. The scenting device (1) according to any one of the claims 7 to 11, **characterized by** a plurality of receiving chambers (11, 12) for receiving fragrance storage units (1).

13. The scenting device (1) according to any one of the claims 7 to 12, **characterized by** at least one fragrance selection device (10).

## Revendications

1. Dispositif de réserve de parfum (1) présentant un dispositif formant réservoir de parfum (13), un dispositif diffuseur de parfum (22) qui est disposé dans le dispositif formant réservoir de parfum, et un dispositif d'accouplement magnétique (24) servant à l'accouplement du dispositif diffuseur de parfum, à au moins un dispositif actionneur (26) qui est prévu à l'extérieur du dispositif du réserve de parfum, **caractérisé en ce que** le dispositif diffuseur de parfum est un disque rotatif (22) doté extérieurement, dans le sens radial, d'un revêtement hydrophilen (23), disque rotatif dans lequel un aimant (24), en tant que dispositif d'accouplement, est dispose en étant décalé de façon asymétrique par rapport au centre du disque rotatif qui, sous l'effet du dispositif actionneur, est mobile suivant un mouvement de rotation.

2. Dispositif de réserve de parfum (1) selon la revendication 1, **caractérisé par** au moins un moyen (42) de stockage d'informations qui est conçu en particulier comme un moyen électronique (42) de stockage d'informations.

3. Dispositif de réserve de parfum (1) selon la revendication 1 ou 2, **caractérisé en ce que** le dispositif d'accouplement (26) au moins au nombre de un est réalisé comme un dispositif d'accouplement par entraînement (26).

4. Dispositif de réserve de parfum (1) selon l'une quelconque des revendications précédentes, **caractérisé en ce que** le dispositif de réserve de parfum (1), en particulier au moins le dispositif formant réservoir de parfum (13) et/ou au moins le dispositif diffuseur de parfum (22) est réalisé au moins partiellement de façon rechargeable et/ou au moins partiellement de façon recyclable.

5. Dispositif de réserve de parfum (1) selon l'une quelconque des revendication précédentes, **caractérisé par** au moins un dispositif de fermeture (16), en particulier par au moins un dispositif de fermeture réversible.

6. Dispositif de réserve de parfum (1) selon l'une quelconque des revendication précédentes, **caractérisé par** au moins un moyen d'encliquetage (5, 6) servant à l'encliquetage dans une zone de logement (11, 12) pour le dispositif de réserve de parfum (1).

7. Dispositif (1) servant à parfumer, en particulier dispositif servant à parfumer et prévu pour un véhicule, de préférence dispositif servant à parfumer et prévu pour un véhicule automobile, **caractérisé par** au moins un dispositif de réserve de parfum selon l'une quelconque des revendications 1 à 6, où au moins un dispositif de réserve de parfum est réalisé en étant de préférence remplaçable.

8. Dispositif (1) servant à parfumer, en particulier dispositif (1) servant à parfumer selon le préambule de la revendication 7, de préférence dispositif (1) servant à parfumer selon la revendication 7, **caractérisé par** au moins un moyen (42) de transmission d'informations qui est conçu en particulier comme un moyen électronique (42) de transmission d'informations.

9. Dispositif (1) servant à parfumer selon la revendication 7 ou 8, **caractérisé par** au moins un espace de logement (11, 12) et/ou par au moins un moyen d'encliquetage (5, 6) servant au logement d'au moins un dispositif de réserve de parfum (1).

10. Dispositif (1) servant à parfumer selon l'une quelconque des revendications 7 à 9, **caractérisé par** au moins un dispositif influençant l'air (8), en particulier par au moins un dispositif de transport de l'air, par au moins und dispositif de modification de la température de l'air et/ou par au moins un dispositif générant des turbulences de l'air.

11. Dispositif (1) servant à parfumer selon l'une quelconque des revendication 7 à 10, **caractérisé en ce que** le dispositif actionneur (26) au moins au nombre de un est conçu au moins partiellement comme und dispositif à moteur (27), en particulier comme un dispositif à moteur électrique.

12. Dispositif (1) servant à parfumer selon l'une quelconque des revendications 7 à 11, **caractérisé par** une pluralité d'espaces de logement (11, 12) servant au logement de dispositif de réserve de parfum (1).

13. Dispositif (1) servant à parfumer selon l'une quelconque des revendications 7 à 12, **caractérisé par** au moins un dispositif de choix de parfums (10).
